# EUROPÄISCHE PATENTSCHRIFT

(11) **EP 2 989 338 B1**
(45) Veröffentlichungstag und Bekanntmachung des Hinweises auf die Patenterteilung: **12.09.2018**
(21) Anmeldenummer: 14714390.3
(22) Anmeldetag: 11.03.2014
(51) Int. Cl.: F16C 33/62, F16C 33/64

(54) **LAGERRING UND VERFAHREN ZUM AUFBRINGEN EINER ELEKTRISCH ISOLIERENDEN BESCHICHTUNG**
BEARING RING AND METHOD FOR APPLYING AN ELECTRICALLY INSULATING COATING
BAGUE DE ROULEMENT ET PROCÉDÉ DE DÉPÔT D'UN REVÊTEMENT ÉLECTRIQUEMENT ISOLANT

(30) Priorität: 25.04.2013 DE 102013104186
(43) Veröffentlichungstag der Anmeldung: 02.03.2016
(73) Patentinhaber: Coatec GmbH, 36381 Schlüchtern (DE); Schaeffler Technologies AG & Co. KG, 91074 Herzogenaurach (DE)
(72) Erfinder: MARTIN, Gudrun, 97502 Euerbach (DE); SMOLORZ, Georg, 97640 Mittelstreu (DE); KIRST, Markus Stefan, 64572 Büttelborn (DE); NIKOLAI, Jens, 36381 Schlüchtern (DE)
(74) Vertreter: Reichert & Lindner Partnerschaft Patentanwälte
(86) Internationale Anmeldenummer: PCT/IB2014/059616
(87) Internationale Veröffentlichungsnummer: WO 2014/174382

(56) Entgegenhaltungen:
- DE-A1- 19 631 988
- DE-A1- 19 957 644
- DE-A1-102010 015 155
- JP-A- H0 552 223

## Beschreibung

Die vorliegende Erfindung betrifft einen Lagerring. Der Lagerring mit einem Korpus weist eine elektrisch isolierende Beschichtung aus einer Keramikschicht mit Poren und einen Kunststoff zum Verfüllen der Poren und Beschichten der Keramikschicht auf.

Die vorliegende Erfindung betrifft ferner eine elektrisch isolierende Beschichtung aus einer Keramikschicht mit Poren und einen Kunststoff zum Verfüllen der Poren und Beschichten der Keramikschicht.

Ferner betrifft die vorliegende Erfindung ein Verfahren zum Aufbringen einer elektrisch isolierenden Beschichtung auf einen Korpus eines Lagerrings.

### Hintergrund der Erfindung

Aus der Praxis ist bekannt, dass ein elektrischer Stromdurchgang durch ein Lager zu einer Beschädigung des Lagers führen kann. Es besteht daher ein Bedarf an elektrisch isolierenden Lagern, insbesondere an elektrisch isolierenden Lagerringen.

Aus dem Stand der Technik sind keramische Beschichtungen bekannt, die als elektrisch isolierende Beschichtung auf einen metallischen, also einem elektrisch leitenden Korpus des Lagerrings aufgebracht sind und so einen Durchtritt von Strom durch das Lager unterdrücken, wie beispielsweise in den deutschen Offenlegungsschriften DE 10 2010 015 155 A1, DE 10 2009 014 753 A1 und DE 196 31 988 A1 und der japanischen Offenlegungsschrift JP H05 52223 A offenbart.

Zudem bestehen die elektrisch isolierenden Beschichtungen im Stand der Technik überwiegend aus einem Aluminiumoxid. Die die elektrisch isolierende Beschichtung bildende Aluminiumoxidschicht ist dabei sehr hart, wobei aber eine Dielektrizitätszahl dieser Beschichtung höher ist als vergleichsweise bei zu isolierenden Kunststoffen.

Ferner sind derartige elektrisch isolierende Beschichtungen stoßempfindlich und können leicht abplatzen, so dass ein feinkörniger Keramik-Werkstoff derart auf den Korpus eines Lagerrings aufgebracht wird, dass eine Keramikschicht gebildet wird, die einen Anteil von Poren von deutlich weniger als 10% aufweist. Um das Eindringen von Feuchtigkeit über die Poren in der Keramikschicht zu vermeiden, wird die Keramikschicht samt Poren versiegelt. Die Schichtdicken derartiger elektrisch isolierender Beschichtungen liegen in der Praxis bei derzeit bei 0,1 bis maximal 0,4 Millimeter.

Da aktuell aber zahlreiche Probleme bezüglich des Stromdurchgangs bei Lagern mit hochfrequenten Strömen auftreten, ist eine Weiterentwicklung notwendig, die eine bessere Isolation gegen hochfrequente Ströme sicherstellt. Eine Aufgabe der gegenwärtigen Erfindung ist daher, einen Lagerring derart zu modifizieren, dass eine erhöhte Isolationsleistung gegenüber kapazitiven Strömen in einem Lager gewährleistet ist.

Diese Aufgabe wird durch einen Lagerring gelöst, der die Merkmale im Anspruch 1 umfasst.

Eine zusätzliche Aufgabe der gegenwärtigen Erfindung ist, ein leicht durchführbares Verfahren zum Aufbringen einer elektrisch isolierenden Beschichtung auf einen Korpus eines Lagerrings anzugeben, beim dem das Lager gegen hochfrequente Ströme geschützt wird.

Diese Aufgabe wird durch ein Verfahren zum Aufbringen einer elektrisch isolierenden Beschichtung gelöst, das die Merkmale des Anspruchs 7 umfasst.

Der erfindungsgemäße Lagerring mit einem Korpus weist eine elektrisch isolierende Beschichtung aus einer Keramikschicht mit Poren und einen Kunststoff zum Verfüllen der Poren und zum Ausbilden einer Beschichtung der Keramikschicht auf. Insbesondere dient die Beschichtung zum Verfüllen der Poren dazu, das keine Feuchtigkeit über die Poren eindringen kann, wobei aber die Dielektrizitätszahl des Kunststoffs niedriger als die der Keramik ist. Erfindungsgemäß besitzen die Poren in der Keramikschicht einen Anteil von 10 bis 50%. Durch diesen Schichtaufbau wird der Isolationscharakter der Beschichtung deutlich verbessert.

Eine erste Ausführungsform der Erfindung sieht vor, dass die Keramikschicht aus einem Oxid besteht, wie beispielsweise aus einem Aluminiumoxid. Eine weitere Ausführungsform sieht vor, dass die Keramikschicht aus einer Kombination aus Oxiden besteht, wie z. B. aus einem Aluminiumoxid mit einem Anteil von Titanoxid. Unter den Begriff eine Kombination von Oxiden fallen auch Mischoxide, so dass die Keramikschicht insbesondere auch aus Spinell bestehen kann. Eine noch weitere Ausführungsform sieht vor, dass die Keramikschicht aus einem Nitrid besteht. Eine aus Nitrid bestehende Keramikschicht könnte beispielsweise aus Aluminiumnitrid sein.

Bei der Erfindung beträgt eine Korngröße einzelner Partikel in der Keramikschicht über 25 µm.

Eine weitere Ausführungsform der Erfindung sieht vor, dass der Kunststoff ein isolierender Kunststoff ist. Hier werden insbesondere Kunststoffe, wie Harz, Siloxan, Polyester oder Acryl verwendet. Denkbar ist aber auch, dass die Beschichtung zum Versiegeln der Poren aus einer Kombination der zuvor genannten Kunststoffe besteht.

Vorzugsweise ist die elektrisch isolierende Beschichtung auf einer Außenseite, zwei gegenüberliegenden Seitenflächen, zwischen der Außenseite und jeder Seitenfläche ausgebildeten Verrundung und von jeder Seitenfläche zu einer Innenseite des Lagerrings verlaufenden Fase des Korpus des Lagerrings aufgebracht.

Eine Schichtdicke der elektrisch isolierenden Beschichtung beträgt 0,2 bis 2,0 mm.

Vorteilhafterweise ermöglicht die Erfindung aufgrund ihrer weniger spröden Beschichtung, dass eine deutlich dickere elektrisch isolierende Beschichtung auf einem Lagerring möglich ist als bei einer einleitend genannten Standardbeschichtung.

Die dickere elektrisch isolierende Beschichtung mit dem höheren Kunststoffanteil bringt gegenüber dem einleitend beschriebenen Stand der Technik somit einen deutlich höheren kapazitiven Widerstand, so dass damit die Isolationsleistung steigt und somit der erfindungsgemäße Lagerring eine verbesserte Isolation gegen hochfrequente Ströme in einem Lager, wie beispielsweise Kugel- oder Rollenlager eines Wälzlager, ermöglicht. Anzumerken ist vor allem auch, dass bei der Erfindung der Wert der Dielektrizitätszahl aufgrund des höheren Kunststoffanteils günstiger als bei den aus dem Stand der Technik feinporigen Keramikschichten ist.

Das erfindungsgemäße Verfahren zum Aufbringen einer elektrisch isolierenden Beschichtung auf einen Korpus eines Lagerrings ist durch die folgenden Schritte gekennzeichnet. Zuerst wird ein Keramik-Werkstoff derart auf den Korpus des Lagerrings aufgebracht, dass eine Keramikschicht gebildet wird, die einen Anteil von Poren von 10 bis 50% aufweist. Anschließend wird ein Kunststoff auf die Keramikschicht aufgebracht, so dass die Poren verfüllt und die Keramikschicht beschichtet wird. Damit wird ein besserer kapazitiver Widerstand erreicht und es kann keine Feuchtigkeit über die Poren eindringen. Abschließend wird dann noch der Kunststoff zum Verfüllen der Poren und Beschichten der Keramikschicht ausgehärtet.

Vorzugsweise wird bei dem Verfahren zum Aufbringen einer elektrisch isolierenden Beschichtung noch vor dem Aufbringen eine Keramik-Werkstoffs eine Strahlbehandlung des Korpus durchgeführt, so dass die aufzubringende Keramikschicht mit dem Grundmaterial des Korpus form- und stoffschlüssig verbunden wird.

Vorteilhafterweise wird bei dem erfindungsgemäßen Verfahren der Keramik-Werkstoff auf den Korpus des Lagerrings durch ein thermisches Spritzenverfahren aufgebracht.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Fig. 1: eine Perspektivansicht eines erfindungsgemäßen Lagerrings mit einem Korpus, der eine elektrisch isolierende Beschichtung aufweist;
- Fig. 2: eine schematische Darstellung der elektrisch isolierende Beschichtung;
- Fig. 3: eine schematische Darstellung der erfindungsgemäßen elektrisch isolierenden Beschichtung, die auf einen Lagerring im Bereich der Verrundung aufgebracht ist; und
- Fig. 4: eine Perspektivansicht eines erfindungsgemäßen Lagerrings.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Lagerring, die erfindungsgemäße elektrisch isolierende Beschichtung und das erfindungsgemäße Verfahren zum Aufbringen einer elektrisch isolierenden Beschichtung ausgestaltet sein können und stellen somit keine abschließende Begrenzung der Erfindung dar.

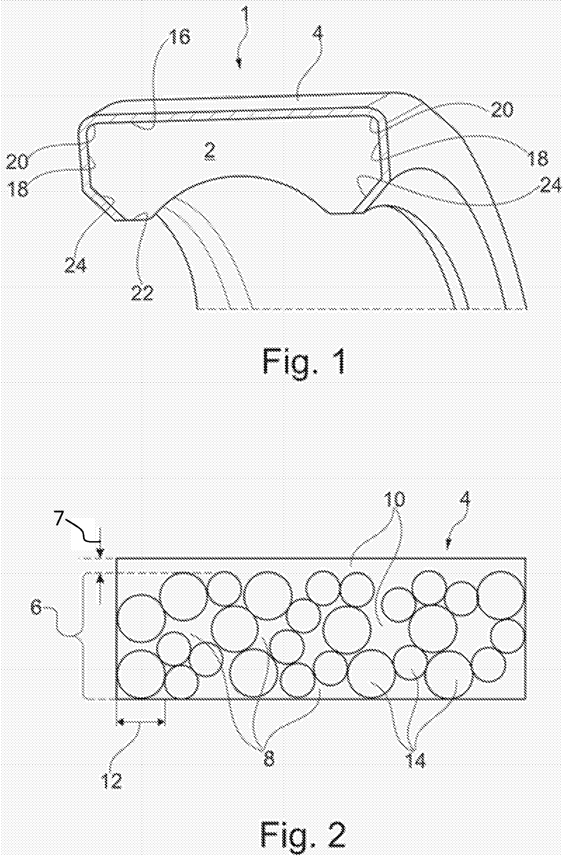

**Figur 1** zeigt eine Perspektivansicht eines erfindungsgemäßen Lagerrings 1 mit einem Korpus 2, der eine elektrisch isolierende Beschichtung 4 aufweist. Die elektrisch isolierende Beschichtung 4 besteht, wie in **Figur 2** gezeigt, aus einer Keramikschicht 6 mit Poren 8 und einen Kunststoff 10 zum Verfüllen der Poren 8 und Beschichten der Keramikschicht 6.

Wie hier gezeigt, ist die elektrisch isolierende Beschichtung 4 auf einer Außenseite 16, zwei gegenüberliegenden Seitenflächen 18, zwischen der Außenseite 16 und jeder Seitenfläche 18 ausgebildeten Verrundung 20 und von jeder Seitenfläche 18 zu einer Innenseite 22 des Lagerrings 1 verlaufenden Fase 24 des Korpus 2 des Lagerrings 1 aufgebracht.

**Figur 2** zeigt eine schematische Darstellung eines Ausschnitts der elektrisch isolierende Beschichtung 4, die wie bereits zu Figur 1 beschrieben, aus einer Keramikschicht 6 mit Poren 8 und einen Kunststoff 10 zum Verfüllen der Poren 8 und zum Ausbilden einer Beschichtung 7 auf der Keramikschicht 6 besteht. Eine Korngröße 12 einzelner Partikel 14 in der Keramikschicht 6 beträgt über 25 µm.

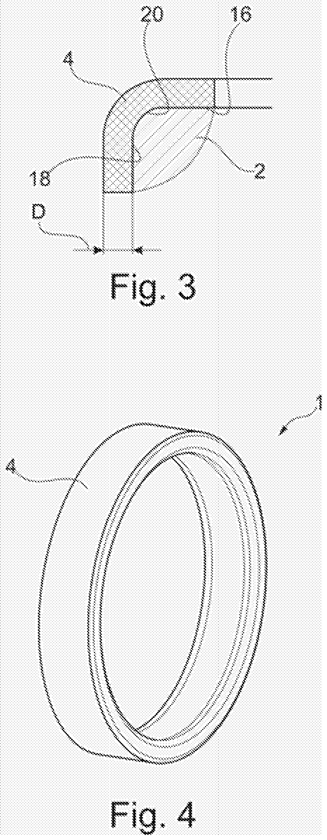

**Figur 3** zeigt eine schematische Darstellung einer Schichtdicke D der erfindungsgemäßen elektrisch isolierenden Beschichtung 4, die auf den Korpus 2 eines Lagerrings 1 (siehe Fig. 4) aufgebracht ist. Die Schichtdicke D kann 0,2 bis 2,0 Millimeter betragen, so dass mit der Erfindung eine entsprechend dicke Isolationsschicht geschaffen ist, die eine Isolation gegen hochfrequente Ströme sicherstellt. Mit dem erfindungsgemäßen Herstellungsverfahren kann auf der Außenseite 16, den Seitenflächen 18 und auch auf der Verrundung 20 eine im Wesentlichen konstante Schichtdicke D aufgebracht werden.

**Figur 4** zeigt eine Perspektivansicht eines erfindungsgemäßen Lagerrings 1. Die elektrisch isolierenden Beschichtung 4 ist auf hier einem Außenring des Lagerrings 1 aufgebracht. Für einen Fachmann ist selbstverständlich, dass die erfindungsgemäße elektrisch isolierende Beschichtung 4 auch bei Innenringen Anwendung finden kann.

### Bezugszeichenliste

- 1: Lagerring
- 2: Korpus
- 4: elektrisch isolierende Beschichtung
- 6: Keramikschicht
- 7: Beschichtung
- 8: Pore
- 10: Kunststoff
- 12: Korngröße
- 14: Partikel
- 16: Außenseite
- 18: Seitenfläche
- 20: Verrundung
- 22: Innenseite
- 24: Fase
- D: Schichtdicke

## Patentansprüche

1. Lagerring (1), mit einem Korpus (2), der eine elektrisch isolierende Beschichtung (4) aus einer Keramikschicht (6) mit Poren (8) aufweist, und einem Kunststoff (10), der zum Verfüllen der Poren (8) und zum Ausbilden einer Beschichtung (7) auf der Keramikschicht (6) vorgesehen ist,
**dadurch gekennzeichnet, dass**
die Poren (8) in der Keramikschicht (6) einen Anteil von 10 bis 50% besitzen.

2. Lagerring (1) nach Anspruch 1, wobei die Keramikschicht (6) aus einem Oxid oder einer Kombination aus Oxiden oder aus einem Nitrid oder Spinell besteht.

3. Lagerring (1) nach einem der vorangehenden Ansprüche, wobei eine Korngröße (12) einzelner Partikel (14) in der Keramikschicht (6) über 25 µm beträgt.

4. Lagerring (1) nach einem der vorangehenden Ansprüche, wobei der Kunststoff ein isolierender Kunststoff (10) ist.

5. Lagerring (1) nach einem der vorangehenden Ansprüche, wobei die elektrisch isolierende Beschichtung (4) auf einer Außenseite (16), zwei gegenüberliegenden Seitenflächen (18), zwischen der Außenseite (16) und jeder Seitenfläche (18) ausgebildeten Verrundung (20) und von jeder Seitenfläche (18) zu einer Innenseite (22) des Lagerrings (1) verlaufenden Fase (24) des Korpus (2) des Lagerrings (1) aufgebracht ist.

6. Lagerring (1) nach einem der vorangehenden Ansprüche, wobei eine Schichtdicke (D) der elektrisch isolierenden Beschichtung (4) 0,2 bis 2,0 mm beträgt.

7. Verfahren zum Aufbringen einer elektrisch isolierenden Beschichtung (4) auf einen Korpus (2) eines Lagerrings (1), **gekennzeichnet durch** die folgenden Schritte:
• Aufbringen eines Keramik-Werkstoffs auf den Korpus (2) des Lagerrings (1) derart, dass eine Keramikschicht (6) gebildet wird, die einen Anteil von Poren (8) von 10 bis 50% aufweist;
• Aufbringen eines Kunststoffs (10) auf die Keramikschicht (6), so dass die Poren (8) verfüllt werden und eine Beschichtung (7) auf der Keramikschicht (6) ausgebildet wird; und
• Aushärten des Kunststoffs (10).

8. Verfahren nach Anspruch 7, wobei vor dem Aufbringen eines Keramik-Werkstoffs eine Strahlbehandlung des Korpus (2) durchgeführt wird, so dass die aufzubringende Keramikschicht (6) mit dem Grundmaterial des Korpus (2) form- und stoffschlüssig verbunden wird.

9. Verfahren nach einem der Ansprüche 7 bis 8, wobei der Keramik-Werkstoff auf den Korpus (2) des Lagerrings (1) durch ein thermisches Spritzverfahren aufgebracht wird.

## Claims

1. A bearing ring (1) with a body (2) having an electrically insulating coating (4) made of a ceramic layer (6) having pores (8), and a plastic material (10) provided for filling up the pores (8) and for forming a coating (7) on the ceramic layer (6),
**characterized in that**
the pores (8) in the ceramic layer (6) have a percentage of 10 to 50%.

2. The bearing ring (1) according to claim 1, wherein the ceramic layer (6) consists of an oxide or a combination of oxides or a nitride or spinel.

3. The bearing ring (1) according to any of the preceding claims, wherein a particle size (12) of single particles (14) in the ceramic layer (6) is larger than 25 µm.

4. The bearing ring (1) according to any of the preceding claims, wherein the plastic material is an insulating plastic material (10).

5. The bearing ring (1) according to any of the preceding claims, wherein the electrically insulating coating (4) is applied to an outer face (16), two opposing side faces (18), a fillet (20) formed between the outer face (16) and each of the side faces (18), and a bevel (24) of the body (2) of the bearing ring (1), which extends from each side face (18) to an inner face (22) of the bearing ring (1).

6. The bearing ring (1) according to any of the preceding claims, wherein a layer thickness (D) of the electrically insulating coating (4) is 0.2 to 2.0 mm.

7. A method for applying an electrically insulating coating (4) to a body (2) of a bearing ring (1),
**characterized by the following steps:**
• applying a ceramic material to the body (2) of the bearing ring (1) such that a ceramic layer (6) having a percentage of pores (8) of 10 to 50% is formed;
• applying a plastic material (10) to the ceramic layer (6) such that the pores (8) are filled up and a coating (7) is formed on the ceramic layer (6); and
• curing the plastic material (10).

8. The method according to claim 7, wherein abrasive blasting is performed on the body (2) prior to applying a ceramic material so that the ceramic layer (6) to be applied is positively connected and firmly bonded with the base material of the body (2).

9. The method according to any of claims 7 to 8, wherein the ceramic material is applied to the body (2) of the bearing ring (1) by a thermal spray process.

## Revendications

1. Bague de roulement (1), possédant un corps (2), qui comporte un revêtement électriquement isolant (4) fait d'une couche de céramique (6) ayant des pores (8) et d'une matière plastique (10) prévue pour remplir les pores (8) et pour former un revêtement (7) sur la couche de céramique (6),
**caractérisée en ce que**
les pores (8) dans la couche de céramique (6) sont présentes en une proportion de 10 à 50 %.

2. Bague de roulement (1) selon la revendication 1, dans laquelle la couche de céramique (6) est constituée d'un oxyde ou d'une combinaison d'oxydes ou d'un nitrure ou de spinelle.

3. Bague de roulement (1) selon l'une des revendications précédentes, dans laquelle une taille de grain (12) de particules (14) individuelles présentes dans la couche de céramique (6) est supérieure à 25 µm.

4. Bague de roulement (1) selon l'une des revendications précédentes, dans laquelle la matière plastique est une matière plastique isolante (10).

5. Bague de roulement (1) selon l'une des revendications précédentes, dans laquelle le revêtement électriquement isolant (4) est appliqué sur une face externe (16), sur deux faces latérales (18) opposées, sur un arrondi (20) formé entre la face externe (16) et chaque face latérale (18), et sur un biseau (24) du corps (2) de la bague de roulement (1) s'étendant à partir de chaque face latérale (18) jusqu'à une face interne (22) de la bague de roulement (1).

6. Bague de roulement (1) selon l'une des revendications précédentes, dans laquelle une épaisseur de couche (D) du revêtement électriquement isolant (4) est comprise entre 0,2 et 2,0 mm.

7. Procédé d'application d'un revêtement électriquement isolant (4) sur un corps (2) d'une bague de roulement (1),
**caractérisé par les étapes suivantes:**
• appliquer un matériau céramique sur le corps (2) de la bague de roulement (1) de telle manière qu'une couche de céramique (6) soit formée, qui comprend une proportion de pores (8) comprise entre 10 et 50 %;
• appliquer une matière plastique (10) sur la couche de céramique (6) de sorte que les pores (8) sont remplies et qu'un revêtement (7) est formé sur la couche de céramique (6); et
• durcir la matière plastique (10).

8. Procédé selon la revendication 7, dans lequel un traitement par jet du corps (2) est effectué avant l'application d'un matériau céramique de sorte que la couche de céramique (6) qui doit être appliquée est reliée au matériau de base du corps (2) par complémentarité de forme et liaison de matière.

9. Procédé selon l'une des revendications 7 à 8, dans lequel le matériau céramique est appliqué sur le corps (2) de la bague de roulement (1) par pulvérisation thermique.
